# EUROPÄISCHE PATENTSCHRIFT

(11) **EP 0 871 542 B1**
(45) Veröffentlichungstag und Bekanntmachung des Hinweises auf die Patenterteilung: **26.01.2000**
(21) Anmeldenummer: 96929295.2
(22) Anmeldetag: 21.08.1996
(51) Int. Cl.: B01J 35/04, F01N 3/28, B01J 35/02

(54) **VERFAHREN ZUM HERSTELLEN EINES WABENKÖRPERS AUS ZWEI UNTERSCHIEDLICH AUFGEBAUTEN METALLBLECHARTEN**
PROCESS FOR MANUFACTURING A HONEYCOMBED BODY FROM TWO DIFFERENT TYPES OF SHEET METAL
PROCEDE DE FABRICATION D'UN CORPS A NIDS D'ABEILLES A PARTIR DE DEUX TYPES DE TOLES METALLIQUES DE CONSTRUCTIONS DIFFERENTES

(30) Priorität: 22.08.1995 DE 19530853
(43) Veröffentlichungstag der Anmeldung: 21.10.1998
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE); WIERES, Ludwig, D-51491 Overath (DE)
(74) Vertreter: Kahlhöfer, Hermann, Dipl.-Phys.
(86) Internationale Anmeldenummer: EP9603674
(87) Internationale Veröffentlichungsnummer: WO9707888

(56) Entgegenhaltungen:
- EP-A- 0 159 468
- EP-A- 0 348 576
- EP-A- 0 392 203
- US-A- 5 366 139

## Beschreibung

Die vorliegende Erfindung bezieht sich auf ein Verfahren zum Herstellen eines Wabenkörpers aus lagenweise geschichteten und/oder gewickelten hochtemperaturbeständigen Metallblechlagen.

Solche Wabenkörper werden insbesondere als Katalysator-Trägerkörper für Abgassysteme von Verbrennungsmotoren verwendet, und sind beispielsweise durch die WO 89/07 488 bekannt. Wabenkörper, die als Abgaskatalysator-Trägerkörper verwendet werden, werden mit einer katalytisch wirkenden Beschichtung zur Reinigung von Abgasen in Kraftfahrzeugen eingesetzt und werden sowohl mechanisch als auch thermisch stark belastet. Neben der thermischen und mechanischen Belastung ist der Wabenkörper den im Abgas sich befindenden aggressiven Gaskomponenten ausgesetzt. Für die Haltbarkeit eines solchen Wabenkörpers ist insbesondere eine hohe Korrosionsbeständigkeit der Metallblechlagen wünschenswert.

Durch die EP 0 159 468 B1 ist es bereits bekannt, daß die verwendeten Blechlagen vorzugsweise aus einem Stahlblech mit einem hohen Aluminiumgehalt bestehen. Ein solcher Werkstoff ist jedoch aufgrund der schlechten Walzbarkeit von Stahl mit hohem Aluminiumanteil und wegen der daraus entstehenden Kosten bei der Herstellung eines solchen Blechs problematisch. Mit diesem Problem setzt sich auch die US 5,366,139 A auseinander. In dieser Patentschrift wird ein Blech zur Verwendung für Wabenkörper vorgeschlagen, das aus einem mit Aluminium plattierten Stahl besteht. Solche Bleche lassen sich in gewissen Grenzen kostengünstig verarbeiten.

Der vorliegenden Erfindung liegt die Aufgabe zugrunde ein Verfahren zum Herstellen eines Wabenkörpers aus lagenweise geschichteten und/oder gewikkelten hochtemperaturkorrosionsbeständigen Metallblechlagen, die zumindest teilweise eine Struktur zur Bildung von für ein Fluid durchströmbaren Kanälen aufweisen, anzugeben, welches besonders für die Herstellung eines Wabenkörpers unter Verwendung von Metallblechlagen mit geschichtetem Aufbau geeignet ist.

Zur Lösung der Aufgabe dient ein Verfahren zum Herstellen eines Wabenkörpers mit den Merkmalen des Anspruchs 1. Vorteilhafte Weiterbildungen sind Gegenstand der Unteransprüche.

Das erfindungsgemäße Verfahren zum Herstellen eines Wabenkörpers aus lagenweise geschichteten und/oder gewickelten hochtemperaturkorrosionsbeständigen Metallblechen, die zumindest teilweise eine Struktur zur Bildung von für ein Fluid durchströmbaren Kanälen aufweisen, zeichnet sich dadurch aus, daß der Wabenkörper aus zwei unterschiedlich aufgebauten Metallblecharten gewickelt und/oder geschichtet wird. Ein Teil der Metallblechlagen besteht aus einem im wesentlichen homogenen zumindest Chrom und Aluminium enthaltenden Stahl. Ein anderer Teil der Metallblechlagen weist einen geschichteten Aufbau auf mit mindestens einer ersten Schicht aus Chrom enthaltendem Stahl und mindestens einer zweiten im wesentlichen Aluminium enthaltenden Schicht. Die Metallblechlagen werden durch eine Wärmebehandlung miteinander verbunden, wobei die Metallblechlagen mit geschichtetem Aufbau durch Diffusion homogenisiert werden.

Durch dieses erfindungsgemäße Verfahren wird insbesondere die Möglichkeit angegeben, Wabenkörper mit Metallblechlagen, die einen geschichteten Aufbau aufweisen, herzustellen, die einen relativ großen Querschnitt aufweisen. Es hat sich herausgestellt, daß bei der Herstellung von Wabenkörpern, die lediglich aus Metallblechlagen mit geschichtetem Aufbau hergestellt wurden die Verbindung der Metallblechlagen untereinander und/oder mit einem den Wabenkörper umgebenden Mantel nicht immer sichergestellt werden kann. Es wurde erkannt, daß bei einer Wärmebehandlung des Wabenkörpers ein Volumenrückgang der Metallblechlagen mit geschichtetem Aufbau eintritt. Der Volumenrückgang der Bleche ist darauf zurückzuführen, daß das Aluminium, welches wenigstens eine äußere Schicht eines Metallblechs bildet während einer Wärmebehandlung in die erste Schicht aus Chrom enthaltendem Stahl hineindiffundiert. Der Einfluß des Volumenrückgangs der Metallbleche mit einem geschichteten Aufbau wird bei dem erfindungsgemäßen Verfahren zur Herstellung eines Wabenkörpers dadurch verringert, daß der Wabenkörper aus zwei unterschiedlich aufgebauten Metallblecharten gewickelt und/oder geschichtet wird. Es wird erfindungsgemäß vorgeschlagen, daß ein Teil der Metallblechlagen aus einem im wesentlichen homogen zumindest Chrom und Aluminium enthaltenden Stahl besteht und ein anderer Teil der Metallblechlagen einen geschichteten Aufbau aufweist. Hierdurch wird auch das elastische Verhalten der geschichteten Blechlagen wärend des Herstellungsprozesses verbessert.

Gemäß einem weiteren vorteilhaften Gedanken wird vorgeschlagen, den Wabenkörper aus abwechselnden Lagen glatter und gewellter Bleche herzustellen. Bei einem solchen Wabenkörper werden glatte Bleche, die aus dem im wesentlichen homogenen Material bestehen und gewellte Bleche, die einen geschichteten Aufbau aufweisen, bevorzugt. Dadurch kann der größte Anteil des Materials aus dem kostengünstig herstellbaren geschichteten Material bestehen, welches sich auch gut wellen läßt.

Bei bestimmten Anwendungen und großen Durchmessern kann aber auch der umgekehrte Fall, nämlich die glatten Bleche aus dem geschichteten Material herzustellen, Vorteile haben.

Vorzugsweise enthalten die Bleche mit dem geschichteten Aufbau drei Schichten, nämlich eine innere Schicht aus Chromstahl, auf die auf beiden Seiten eine im wesentlichen Aluminium enthaltende Schicht aufgebracht, vorzugsweise aufgewalzt, ist. Ein solches Blech hat den Vorteil, daß insbesondere bei der Wärmebehandlung benachbarte Blechlagen untereinander durch Diffusion an ihren Berührungsstellen verbunden werden. Neben der Möglichkeit einer Verbindung der Blechlagen untereinander durch Diffusion wird vorgeschlagen, die Blechlagen vor oder nach dem Wickeln oder Schichten zumindest in Teilbereichen mit Lot zu versehen und miteinander in einem Wärmebehandlungsschritt zu verlöten. Hierdurch wird ein Wabenkörper erzielt, der eine hohe mechanische Festigkeit aufweist.

Um sicherzustellen, daß während der Wärmebehandlung die Berührungsstellen die Berührungsstellen zwischen den Blechlagen sich nicht öffnen, wird gemäß einer weiteren vorteilhaften Weiterbildung des Verfahrens vorgeschlagen, den Volumenrückgang der Bleche mit geschichtetem Aufbau durch elastisches Rückfedern der Blechlagen auszugleichen. Hierzu werden die Blechlagen bei oder nach dem Wickeln mit einer Vorspannung versehen in ein Mantelrohr eingesetzt.

Vorzugsweise ist ein Teil der Blechlagen mit einer zusätzlichen Mikrostruktur versehen. Durch die Ausbildung zusätzlicher Mikrostrukturen kann die Elastizität der Blechlagen erhöht werden. Andererseits wird die zur Aufrechterhaltung der Berührungsstellen während der Wärmebehandlung notwendige Vorspannung des Wabenkörpers verringert, da die durch die Mikrostrukturen gegebenen Berührungsstellen eine geringere Fläche aufweisen als sonst linienförmige Berührungsstellen zwischen den Blechlagen. Die Mikrostrukturen führen auch zu einer Verbesserung der Durchmischung des durch den Wabenkörper strömenden Gases. Die Mikrostrukturen werden bevorzugt vor dem Wickeln oder Schichten in die Blechlagen eingebracht. Die Mikrostruktur als solche ist als eine quer zu den Kanälen verlaufende Struktur ausgebildet und z.B aus der EP 0 454 712 B1 bekannt.

Gemäß einem weiteren vorteilhaften Gedanken wird ein Verfahren zum Herstellen eines Wabenkörpers vorgeschlagen, bei dem der Wabenkörper in ein Mantelrohr eingesetzt wird, wobei das Mantelrohr auf seiner Innenseite zumindest in Teilbereichen eine im wesentlichen aus Aluminium bestehende Schicht aufweist. Ein so ausgebildetes Mantelrohr hat den Vorteil, daß die Blechlagen, welche in Kontakt mit dem Mantelrohr gelangen, an ihren Berührungsstellen mit dem Mantelrohr durch Diffusion verbunden werden können. Des weiteren ist das Mantelrohr gegenüber aggressiven Abgasen korrosionsbeständiger.

Weitere Vorteile und Merkmale des erfindungsgemäßen Verfahrens werden anhand eines in der Zeichnung dargestellten Wabenkörpers erläutert. Es zeigen:
- Fig. 1: schematisch einen Wabenkörper in der Vorderansicht,
- Fig. 2: eine Metallblechlage mit beschichtetem Aufbau und
- Fig. 3: eine Berührungsstelle zwischen einer Metallblechlage mit einem geschichteten Aufbau und einer Metallblechlage aus einem im wesentlichen homogenen Stahl.

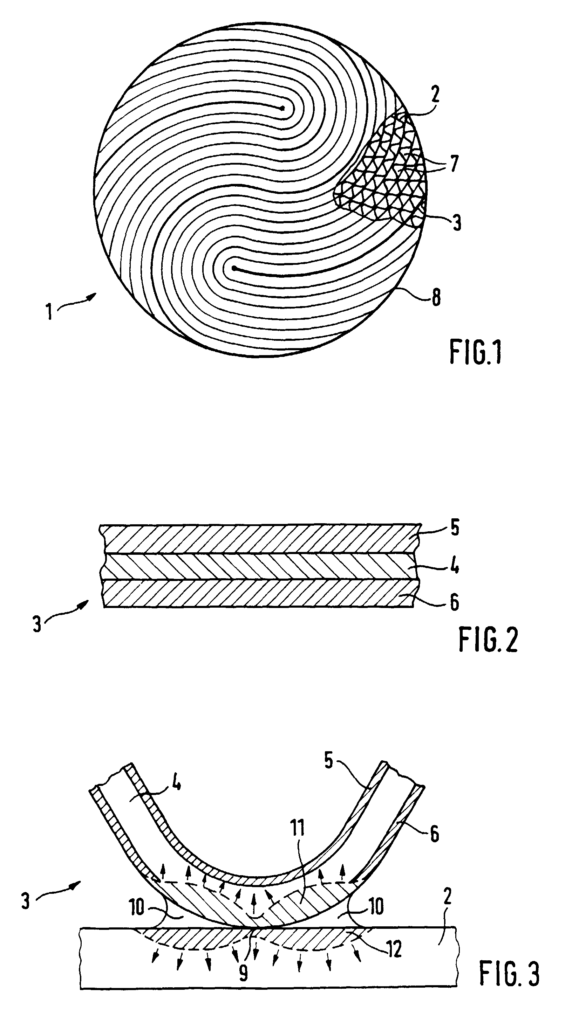

In der Figur 1 ist ein Wabenkörper 1 dargestellt. Der Wabenkörper 1 besteht aus lagenweise geschichteten und gewickelten hochtemperaturkorrosionsbeständigen Metallblechlagen. Der Wabenkörper 1 ist aus abwechselnden Lagen glatter und gewellter Bleche 2, 3 hergestellt. Die glatten Bleche 2 bestehen aus dem im wesentlichen homogenen zumindest Chrom und Aluminium enthaltenden Stahl. Die gewellten Bleche 3 weisen einen geschichteten Aufbau auf. Die gewellten und beschichteten Bleche 3 enthalten eine innere Schicht 4 aus Chromstahl, auf die auf beiden Seiten eine im wesentlichen Aluminium enthaltende Schicht 5, 6 aufgebracht ist, wie dies aus der Figur 2 ersichtlich ist. Der aus lagenweise geschichteten und gewickelten Metallblechen hergestellte Wabenkörper 1 weist eine Struktur auf zur Bildung von für ein Fluid durchströmbaren Kanälen 7 auf. Die Blechlagen sind in einem Mantelrohr 8 angeordnet. Das Mantelrohr 8 weist auf seiner Innenseite zumindest in Teilbereichen eine im wesentlichen aus Aluminium bestehende Schicht auf.

In der Figur 3 ist eine Berührungsstelle eines glatten Bleches 2 mit einem gewellten Blech 3 dargestellt. Das gewellte Blech 3 weist einen wie in der Figur 2 dargestellten geschichteten Aufbau auf. Während der Wärmebehandlung, durch die gleichzeitig die Bleche 2, 3 untereinander durch Diffusion an ihren Berührungsstellen verbunden werden, wird die Schicht 6 auf der inneren Schicht 4 des gewellten Bleches 3 aufgeschmolzen. Die aufgeschmolzene Schicht 3 benetzt die Oberfläche der Bleche, wobei aufgrund von Kapillarwirkung an der Berührungsstelle 9 ein Teil des Aluminiums in die Spalten 10 zwischen dem gewellten Blech 3 und dem glatten Blech 2 fließt. Während des Wärmebehandlungschrittes diffundiert Aluminium in das glatte Blech 2 und in die innere Schicht 4 des gewellten Bleches 3. Hierbei entstehen Zonen 11, 12 die einen erhöhten Aluminiumgehalt aufweisen. Aluminium-Stahl-Legierungen haben einen wesentlich geringeren Schmelzpunkt als Stahl, so daß sich die innere Schicht 4 des gewellten Bleches 3 und das glatte Blech 2 in den Zonen 11, 12 vorübergehend verflüssigen und eine innige Verbindung im Umgebungsbereich der Berührungsstelle 9 entsteht, die nahezu die Eigenschaften einer Schweißverbindung aufweist. Aufgrund des Konzentrationsgradienten wandert Aluminium, wie durch die Pfeile angedeutet, weiter in die Bleche 2, 3 hinein, wodurch eine Verarmung des Aluminiumgehaltes in den Zonen 11, 12 stattfindet und dadurch der Schmelzpunkt der Zonen 11, 12 sich erhöht, so daß die Verbindungsstelle erstarrt.

Erfindungsgemäße Wabenkörper lassen sich kostengünstig bei guter Qualität herstellen, insbesondere auch mit großen Durchmessern über 90 mm, insbesondere über 105 mm oder sogar 120 mm.

### Bezugszeichenliste

- 1: Wabenkörper
- 2: Glattes Blech
- 3: Gewelltes Blech
- 4: Innere Schicht
- 5, 6: Aluminiumschicht
- 7: Kanal
- 8: Mantelrohr
- 9: Berührungsstelle
- 10: Spalt
- 11, 12: Diffusionszone

## Patentansprüche

1. Verfahren zum Herstellen eines Wabenkörpers (1) aus lagenweise geschichteten und/oder gewickelten hochtemperaturkorrosionsbeständigen Metallblechlagen (2, 3), die zumindest teilweise eine Struktur zur Bildung von für ein Fluid durchströmbaren Kanälen (7) aufweisen, mit folgenden Schritten
- der Wabenkörper (1) wird aus zwei unterschiedlich aufgebauten Metallblecharten (2, 3) gewickelt oder geschichtet,
- ein Teil der Metallblechlagen (2) besteht aus einem im wesentlichen homogenen zumindest Chrom und Aluminium enthaltenden Stahl,
- ein anderer Teil der Metallblechlagen (3) weist einen geschichteten Aufbau auf mit mindestens einer ersten Schicht (4) aus Chrom enthaltendem Stahl und mindestens einer zweiten im wesentlichen Aluminium enthaltenden Schicht (5, 6),
- die Metallblechlagen (2, 3) werden durch eine Wärmebehandlung miteinander verbunden, wobei die Metallblechlagen mit geschichtetem Aufbau durch Diffusion homogenisiert werden.

2. Verfahren nach Anspruch 1, dadurch gekennzeichnet, daß der Wabenkörper (1) aus abwechselnden Lagen glatter und gewellter Bleche (2 bzw. 3) hergestellt wird, wobei die glatten Bleche (2) aus dem im wesentlichen homogenen Material bestehen und die gewellten Bleche (3) den geschichteten Aufbau aufweisen.

3. Verfahren nach Anspruch 1, dadurch gekennzeichnet, daß der Wabenkörper (1) aus abwechselnden Lagen glatter und gewellter Bleche (2 bzw. 3) hergestellt wird, wobei die gewellten Bleche (2) aus dem im wesentlichen homogenen Material bestehen und die glatten Bleche (3) den geschichteten Aufbau aufweisen.

4. Verfahren nach Anspruch 1, 2 oder 3, dadurch gekennzeichnet, daß die Bleche (3) mit dem geschichteten Aufbau drei Schichten enthalten, nämlich eine innere Schicht (4) aus Chromstahl, auf die auf beiden Seiten eine im wesentlichen Aluminium enthaltende Schicht (5, 6) aufgebracht ist, vorzugsweise aufgewalzt.

5. Verfahren nach Anspruch 1, 2, 3 oder 4, dadurch gekennzeichnet, daß die Blechlagen (2, 3) vor oder nach dem Wickeln oder Schichten zumindest in Teilbereichen mit Lot versehen werden und die Wärmebehandlung ein Lötvorgang ist.

6. Verfahren nach Anspruch 1, 2, 3 oder 4, dadurch gkennzeichnet, daß bei der Wärmebehandlung gleichzeitig die Blechlagen (2, 3) untereinander durch Diffusion an ihren Berührungsstellen (9) verbunden werden.

7. Verfahren nach einem der vorhergehenden Ansprüche, dadurch gekennzeichnet, daß die Blechlagen (2, 3) bei oder nach dem Wickeln mit einer solchen Vorspannung versehen in ein Mantelrohr (8) eingesetzt werden, daß der Volumenrückgang der Bleche (3) mit geschichtetem Aufbau bei der Wärmebehandlung durch elastisches Rückfedern der Blechlagen (2) ausgeglichen wird und die Berührungsstellen (9) zwischen den Blechlagen (2, 3) sich nicht öffnen.

8. Verfahren nach einem der vorhergehenden Ansprüche, dadurch gekennzeichnet, daß zumindest ein Teil der Blechlagen vor dem Wickeln oder Schichten mit einer zusätzlichen Mikrostruktur versehen wird.

9. Verfahren nach Anspruch 8, dadurch gekennzeichnet, daß die Mikrostruktur eine transversal zu den Kanälen (7) verlaufende Struktur ist.

10. Verfahren nach Anspruch 8, dadurch gekennzeichnet, daß die Mikrostruktur eine etwa parallel zu den Kanälen verlaufende Struktur ist.

11. Verfahren nach einem der vorhergehenden Ansprüche, dadurch gekennzeichnet, daß der Wabenkörper (1) in ein Mantelrohr (8) eingesetzt wird, welches auf seiner Innenseite zumindest in Teilbereichen eine im wesentlichen aus Aluminium bestehende Schicht aufweist.

## Claims

1. A process for the production of a honeycomb body (1) from high temperature corrosion-resistant metal sheet layers (2, 3) which are wound and/or stacked in a layerwise manner and which at least partially have a structure for forming passages (7) through which a fluid can flow, comprising the following steps
- the honeycomb body (1) is wound or stacked from two differently constructed kinds of metal sheets (2, 3),
- a portion of the metal sheet layers (2) comprises a substantially homogenous steel containing at least chromium and aluminum,
- another portion of the metal sheet layers (3) is of a layered construction with at least a first layer (4) of chromium-bearing steel and at least a second layer (5, 6) which substantially contains aluminum, and
- the metal sheet layers (2, 3) are connected together by a heat treatment, wherein the metal sheet layers of layered construction are homogenised by diffusion.

2. A process as set forth in claim 1 characterised in that the honeycomb body (1) is produced from alternate layers of smooth and corrugated sheets (2 and 3 respectively), wherein the smooth sheets (2) comprise the substantially homogenous material and the corrugated sheets (3) are of the layered construction.

3. A process as set forth in claim 1 characterised in that the honeycomb body (1) is produced from alternate layers of smooth and corrugated sheets (2 and 3 respectively), wherein the corrugated sheets (2) comprise the substantially homogenous material and the smooth sheets (3) are of the layered construction.

4. A process as set forth in claim 1, claim 2 or claim 3 characterised in that the sheets (3) of the layered construction include tnree layers, namely an inner layer (4) of chromium steel onto which, on both sides thereof, a layer (5, 6) which substantially contains aluminum is applied, preferably by being rolled thereonto.

5. A process as set forth in claim 1, claim 2, claim 3 or claim 4 characterised in that the sheet layers (2, 3) are provided with brazing material at least in partial regions thereof prior to or after the winding or stacking procedure and the heat treatment is a brazing operation.

6. A process as set forth in claim 1, claim 2, claim 3 or claim 4 characterised in that in the heat treatment at the same time the sheet layers (2, 3) are connected together by diffusion at their contact locations (9).

7. A process as set forth in one of the preceding claims characterised in that the sheet layers (2, 3) are fitted into a tubular casing (8), provided with such a prestressing, in or after the winding operation, that the reduction in volume of the sheets (3) of layered construction in the heat treatment is compensated by an elastic spring-back effect of the sheet layers (2) and the contact locations (9) between the sheet layers (2, 3) do not open.

8. A process as set forth in one of the preceding claims characterised in that at least a portion of the sheet layers is provided with an additional microstructure prior to the winding or stacking operation.

9. A process as set forth in claim 8 characterised in that the microstructure is a structure extending transversely with respect to the passages (7).

10. A process as forth in claim 8 characterised in that the microstructure is a structure extending approximately parallel to the passages.

11. A process as set forth in one of the preceding claims characterised in that the honeycomb body (1) is fitted into a tubular casing (8) which on its inside at least in partial regions thereof has a layer which substantially comprises aluminum.

## Revendications

1. Procédé destiné à la fabrication d'un corps alvéolaire (1) constitué de couches de tôles métalliques (2, 3) résistant à la corrosion et aux hautes températures, qui sont empilées et/ou enroulées par couches et comportent, au moins partiellement, une structure pour la formation de canaux (7) pouvant être traversés par un fluide, comportant les phases suivantes
- le corps alvéolaire (1) est enroulé ou empilé à partir de deux types de tôles métalliques (2, 3) de différentes structures,
- une partie des couches de tôles métalliques (2) est constituée d'un acier sensiblement homogène contenant au moins du chrome et de l'aluminium,
- une autre partie des couches de tôles métalliques (3) présente une structure à couches, avec au moins une première couche (4) en acier contenant du chrome, et au moins une deuxième couche (5, 6) contenant essentiellement de l'aluminium,
- les couches de tôles métalliques (2, 3) sont reliées entre elles par un traitement thermique, les couches de tôles métalliques présentant une structure à couche étant homogénéisées par diffusion.

2. Procédé selon la revendication 1, caractérisé en ce que le corps alvéolaire (1) est fabriqué à partir de couches alternées de tôles lisses et ondulées (2 ou 3), les tôles lisses (2) étant constituées du matériau sensiblement homogène, et les tôles ondulées (3) présentant la structure à couches.

3. Procédé selon la revendication 1, caractérisé en ce que le corps alvéolaire (1) est fabriqué à partir de couches alternées de tôles lisses et ondulées (2 ou 3), les tôles ondulées (2) étant constituées du matériau sensiblement homogène, et les tôles lisses (3) présentant la structure à couches.

4. Procédé selon la revendication 1, 2 ou 3, caractérisé en ce que les tôles (3) présentant la structure à couches comportent trois couches, à savoir une couche intérieure (4) en acier chromé, sur les deux faces de laquelle est appliquée, de préférence par laminage, une couche (5, 6) contenant essentiellement de l'aluminium.

5. Procédé selon la revendication 1, 2, 3 ou 4, caractérisé en ce que les couches de tôles (2, 3) sont munies de brasure avant ou après l'enroulement ou l'empilage, au moins dans des zones partielles, et en ce que le traitement thermique est un processus de brasage

6. Procédé selon la revendication 1, 2, 3 ou 4, caractérisé en ce que, lors du traitement thermique, les couches de tôles (2, 3) sont simultanément reliées entre elles par diffusion au niveau de leurs points de contact (9) .

7. Procédé selon l'une quelconque des revendications précédentes, caractérisé en ce que, lors de, ou après, l'enroulement, les couches de tôles (2, 3) sont insérées dans un tube d'enveloppe (8) avec une précontrainte telle que le retrait de volume des tôles (3) présentant une structure à couches soit compensé lors du traitement thermique par une détente élastique des couches de tôles (2), et que les points de contact (9) entre les couches de tôles (2, 3) ne s'ouvrent pas.

8. Procédé selon l'une quelconque des revendications précédentes, caractérisé en ce que, avant l'enroulement ou l'empilage, une partie au moins des couches de tôles est munie d'une microstructure supplémentaire.

9. Procédé selon la revendication 8, caractérisé en ce que la microstructure est une structure s'étendant transversalement aux canaux (7).

10. Procédé selon la revendication 8, caractérisé en ce que la microstructure est une structure s'étendant sensiblement parallèlement aux canaux.

11. Procédé selon l'une quelconque des revendications précédentes, caractérisé en ce que le corps alvéolaire (1) est inséré dans un tube d'enveloppe (8) qui comporte sur sa face intérieure, au moins dans des zones partielles, une couche constituée essentiellement d'aluminium.
